# FASCICULE DE BREVET EUROPEEN

(11) **EP 1 216 479 B1**
(45) Date de publication et mention de la délivrance du brevet: **06.08.2003**
(21) Numéro de dépôt: 00966204.0
(22) Date de dépôt: 27.09.2000
(51) Int. Cl.: G21C 3/07, C22F 1/18, C22C 16/00

(54) **ALLIAGE A BASE DE ZIRCONIUM ET PROCEDE DE FABRICATION DE COMPOSANT POUR ASSEMBLAGE DE COMBUSTIBLE NUCLEAIRE EN UN TEL ALLIAGE**
ZIRKONIUMLEGIERUNG UND VERFAHREN ZUR HERSTELLUNG EINES BAUTEILES FÜR KERNREAKTORBRENNSTABBÜNDEL AUS DIESER LEGIERUNG
ZIRCONIUM BASED ALLOY AND METHOD FOR MAKING A COMPONENT FOR NUCLEAR FUEL ASSEMBLY WITH SAME

(30) Priorité: 30.09.1999 FR 9912247
(43) Date de publication de la demande: 26.06.2002
(73) Titulaire: Framatome ANP, 92400 Courbevoie (FR); Compagnie Européenne du Zirconium CEZUS, 92400 Courbevoie (FR)
(72) Inventeur: CHARQUET, Daniel, F-73400 Ugine cedex (FR); MARDON, Jean-Paul, F-69300 Caluire (FR); SENEVAT, Jean, F-73400 Annecy (FR)
(74) Mandataire: Jacobson, Claude
(86) Numéro de dépôt international: FR0002666
(87) Numéro de publication internationale: WO01024193

(56) Documents cités:
- WO-A-93/16205
- WO-A-97/05628
- WO-A-99/50854
- FR-A- 2 769 637

## Description

La présente invention concerne les alliages à base de zirconium destinés à constituer des composants pour assemblage de combustible nucléaire utilisables dans les réacteurs nucléaires à eau légère tels que les gaines de crayon de combustible nucléaire ou les tubes guides d'assemblage, ou même des produits plats tels que des plaquettes de grille.

Elle trouve une application particulièrement importante, bien que non exclusive, dans le domaine de la fabrication de tubes de gainage pour les crayons de combustible destinés à ceux des réacteurs à eau sous pression dans lesquels les risques de corrosion sont particulièrement élevés par suite d'une teneur forte en lithium et éventuellement de risques d'ébullition, ainsi que dans celui des feuillards utilisés pour les composants de structure des assemblages de combustible de tels réacteurs. Elle propose également un procédé de fabrication de tels composants.

La demande de brevet WO-A-99/50854 propose un alliage à base de zirconium contenant également, en poids, en dehors des impuretés inévitables, 0,03 à 0,25% au total de fer d'une part, de l'un au moins des éléments du groupe constitué du chrome et du vanadium d'autre part, ayant 0,8 à 1,3% de niobium, moins de 2000 ppm d'étain, 500 à 2000 ppm d'oxygène, moins de 100 ppm de carbone, de 5 à 35 ppm de soufre et moins de 50 pm de silicium, le rapport entre la teneur en fer d'une part, la teneur en chrome ou en vanadium d'autre part, étant comprise entre 0,5 et 30.

Le document WO-A-97/05628 divulgue un alliage au zirconium pour des applications nucléaires dont la composition, en pourcentage de poids, consiste en : 0,8-1,8 % Nb; 0,2-0,6 % Sn; 0,02-0,4 % Fe; 30-180 ppm C; 10-120 ppm Si; 600-1800 ppm O; reste Zr et impuretés inévitables. Le document WO-A-97/05628 divulgue également un procédé de fabrication de tube à partir de cet alliage.

L'invention est fondée sur des constatations faites par les inventeurs au cours d'une étude systématique des phases intermétalliques et des formes cristallographiques de ces phases qui apparaissent lorsque l'on fait varier les teneurs relatives en fer et en niobium alors que les teneurs en étain, soufre et oxygène sont décrites dans la demande mentionnée plus haut. Elle est également fondée sur la constatation, faite expérimentalement, que la nature et la forme cristallographique des phases intermétalliques contenant du zirconium, du fer et du niobium, ont une influence importante sur la résistance à la corrosion dans divers environnements.

En particulier il a été constaté que la présence de composés à structure cristalline à maille cubique à faces centrées, obtenue grâce à une proportion de fer par rapport au niobium suffisante pour conduire à la présence de (Zr Nb)₄ Fe₂, aux dépens du composé Zr (Nb, Fe)₂ à maille hexagonale et de la phase βNb qui prédominent aux rapports élevés Nb/Fe, améliore notablement la corrosion en milieu fortement lithié, tel que celui qui existe au début d'un cycle de fonctionnement de certains réacteurs à eau sous pression. En revanche, la présence de la phase à maille cubique à faces centrées en trop grande quantité dégrade légèrement la tenue à la corrosion en milieu aqueux.

La présente invention vise notamment à fournir un alliage permettant d'arriver à des composants dont la composition peut être adaptée de façon optimale aux conditions d'utilisation prévues et dont la composition n'est pas de nature à gêner de façon excessive les étapes de fabrication.

Dans ce but, l'invention propose notamment un alliage à base de zirconium contenant également, en poids, en dehors des impuretés inévitables, 0,02 à 1% de fer, 0,8% à 2,3% de niobium, moins de 2000 ppm d'étain, moins de 2000 ppm d'oxygène, moins de 100 ppm de carbone, de 5 à 35 ppm de soufre et moins de 0,25 % au total de chrome et/ou de vanadium, le rapport R entre la teneur en niobium moins 0,5 % et la teneur en fer, complétée éventuellement par la teneur en chrome et/ou en vanadium, étant inférieur à 3.

Le choix du rapport R = (Nb-0,5 %)/Fe+Cr+V résulte de la constatation que la phase à maille cubique à faces centrées apparaît dès que la relation entre la teneur en Fe (plus en Cr et V s'ils sont présents) et la teneur en Nb est telle que R soit inférieur à un seuil qui dépend légèrement des teneurs en autres éléments et de la température mais est au plus de 3.

L'invention propose également un procédé de fabrication d'un tube suivant lequel :
- on constitue une barre en un alliage à base de zirconium contenant également, en poids, en dehors des impuretés inévitables, 0,02 à 1% de fer, 0,8% à 2,3 % de niobium, moins de 2000 ppm d'étain, moins de 2000 ppm d'oxygène, moins de 100 ppm de carbone, de 5 à 35 ppm de soufre et moins de 0,25 % au total de chrome et/ou de vanadium, le rapport entre la teneur en niobium moins 0,5 % et la teneur en fer, complétée éventuellement par la teneur en chrome et/ou en vanadium, est inférieur à 3,
- on trempe à l'eau la barre après chauffage entre 1000°C et 1200°C ;
- on file une ébauche après chauffage à une température entre 600°C et 800°C ;
- on lamine à froid, en au moins deux passes, ladite ébauche pour obtenir un tube, avec des traitements thermiques intermédiaires entre 560°C et 620°C ; et
- on effectue un traitement thermique final entre 560°C et 620°C, l'ensemble des traitements thermiques étant effectué en atmosphère inerte ou sous vide.

Le traitement thermique final laisse le tube à l'état recristallisé, favorable à la résistance au fluage, sans modification de la nature des phases. L'ajout de chrome et/ou de vanadium, qui se substitue au fer et au niobium dans la phase hexagonale, permet de contrôler la proportion entre les deux phases hexagonale et cubique à faces centrées.

L'alliage peut également être utilisé pour constituer des éléments plats. Ils seront également utilisés à l'état recristallisé et peuvent être fabriqués par la séquence suivante : on constitue une ébauche en un alliage à base de zirconium contenant également, en poids, en plus des impuretés inévitables, 0,02 à 1% de fer, 0,8% à 2,3% de niobium, moins de 2000 ppm d'étain, moins de 2000 ppm d'oxygène, moins de 100 ppm de carbone, de 5 à 35 ppm de soufre et moins de 0,25 % au total de chrome et/ou de vanadium, le rapport R entre la teneur en niobium moins 0,5 % et la teneur en fer, complétée éventuellement par la teneur en chrome et/ou en vanadium, étant inférieur à 3,
on lamine à froid, en au moins trois passes, l'ébauche avec des traitements thermiques intermédiaires et un traitement thermique final,
l'un de ces traitements thermiques intermédiaires ou un traitement thermique préalable avant la première passe de laminage à froid étant effectué pendant une durée longue d'au moins 2 heures à une température inférieure à 600°C, et
tous les traitements thermiques éventuels qui suivent le traitement long et, en particulier le traitement final de recristallisation, étant effectués à une température inférieure à 620°C.

L'invention propose également l'application de l'alliage ci-dessus à la constitution de composants de réacteur nucléaire à eau sous pression contenant initialement moins de 5 ppm de lithium. Bien que cette teneur diminue ensuite rapidement, par suite de sa consommation pour ajuster le pH du réfrigérant, il peut être important d'éviter une corrosion initiale rapide.

L'existence des composés intermétalliques due à la présence de fer en quantité suffisante, y compris celle de Zr(Nb, Fe)₂, diminue la quantité des précipités de niobium en phase β défavorables à la corrosion en milieu lithié, mais aussi la teneur en niobium de la solution solide et donne ainsi une résistance satisfaisante à la corrosion uniforme à une température aux environs de 400°C, représentative de celle qui règne dans des réacteurs.

La présence de chrome et/ou de vanadium en remplacement très partiel du fer dans les précipités inter-métalliques de type Zr (Nb, Fe, Cr, V)₂ n'a pas d'influence marquée sur la corrosion à 400°C car il y a simplement substitution du chrome et/ou vanadium au fer et/ou du niobium dans le composé intermétallique, au fur et à mesure de l'augmentation de la teneur en chrome. La tenue améliorée à la corrosion à 400°C reste acquise surtout si la somme Fe+Cr (plus vanadium éventuellement) est d'au moins 0,03 %.

En résumé, un alliage du genre ci-dessus, utilisé à l'état recristallisé pour augmenter sa tenue au fluage biaxé des tubes et à l'aptitude à l'emboutissage des tôles présente des caractéristiques ajustables par réglage du rapport fer/niobium, mais toujours favorables à :
- une résistance élevée à la corrosion en milieu aqueux à haute température, éventuellement lithié, d'autant plus élevée dans ce dernier cas que l'on adopte une teneur en fer élevée, autorisée par une teneur en Nb élevée et avec un rapport fer/niobium dépassant 0,3,
- une résistance élevée au fluage grâce à la présence d'étain qui reste à une très faible teneur et, grâce au dopage par l'oxygène, à une teneur inférieure à 2000 ppm qui n'a alors pas d'effet néfaste sur la résistance à la corrosion.

Dans les réacteurs actuels, les plages ci-après sont particulièrement intéressantes comme alliage à base de zirconium contenant également, en poids, en dehors des impuretés inévitables :
- Nb : 0,8 % à 1,1 % en poids
- Fe : 0,3 % à 0,35 % en poids
- Sn : 0,15 % à 0,20 % en poids
- Cr et/ou V : 0,01 à 0,1 % en poids
- O₂ : entre 1000 et 1600 ppm
- S : entre 5 et 35 ppm
- C : moins de 100 ppm

Les caractéristiques ci-dessus ainsi que d'autres apparaîtront mieux à la lecture de la description qui suit, de modes particuliers de réalisation, donnés à titre d'exemple non limitatif. La description se réfère aux dessins qui l'accompagnent, dans lesquels :
- la figure 1 est un diagramme ternaire montrant les composés intermétalliques et microstructures qui apparaissent pour divers domaines de composition, pour une teneur de 0,2 % en étain, à une température comprise entre 560°C et 620°C;

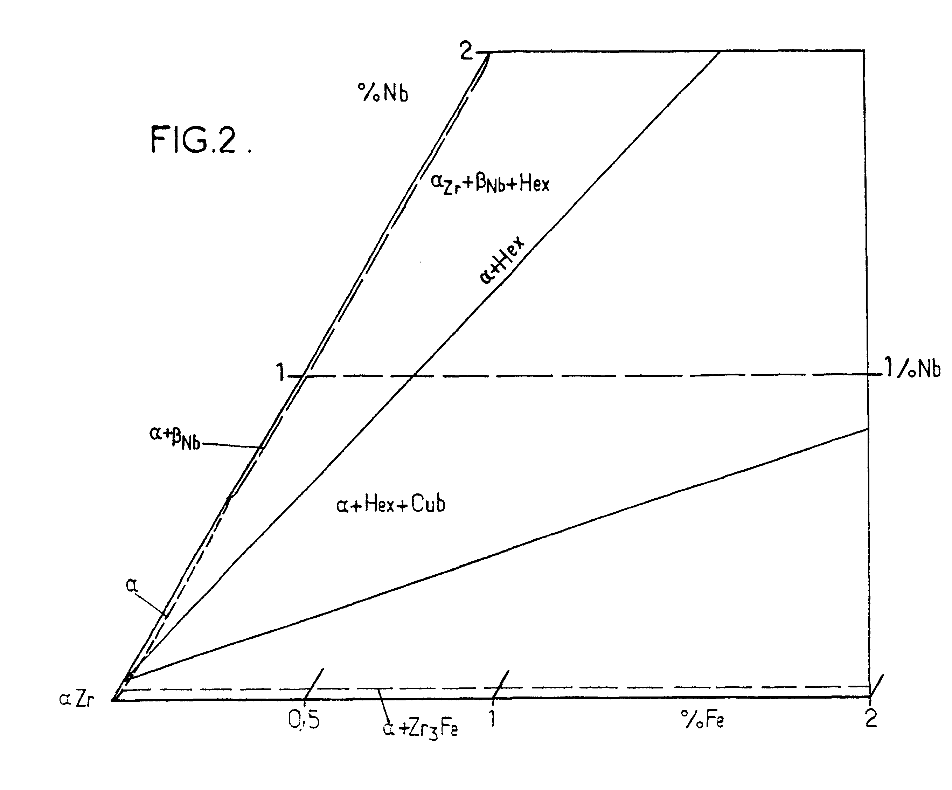

- la figure 2 montre à grande échelle une fraction du diagramme ;
- la figure 3 montre des résultats d'essais de corrosion en milieu lithié sur des échantillons à teneus variables en fer et en niobium.

Les teneurs en carbone et en oxygène étaient sensiblement identiques pour tous les échantillons et étaient inférieures aux valeurs maximales données plus haut. La teneur en étain était de 0,2 % et la teneur en soufre de 10 ppm.

Les échantillons ont été fabriqués par des opérations thermo-métallurgiques à une température ne dépassant pas 620°C, tout traitement dépassant cette valeur au-delà de l'opération de filage réduisant la résistance à la corrosion à chaud.

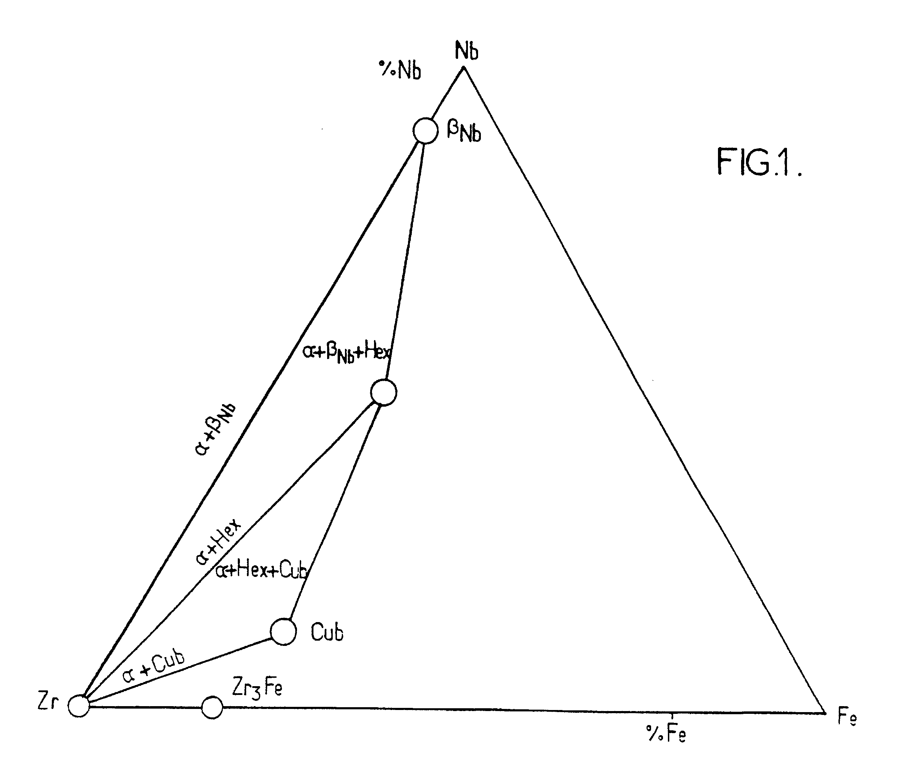

Le diagramme ternaire de la figure 1 fait apparaître, pour des rapports Fe/Nb inférieurs à 0,3 environ, l'existence d'une zone dans laquelle coexistent la phase αZr (à l'exclusion de la phase βZr qui est très défavorable du point de vue de la résistance à la corrosion), les précipités de phase βNb et la phase intermétallique Zr(Nb,Fe)₂ qui a une structure hexagonale.

Pour un rapport Fe/Nb élevé, et cela jusqu'à une teneur en niobium de l'ordre de 50 %, supérieure de plus d'un ordre de grandeur aux teneurs utilisées, apparaît également le composé (Zr,Nb)₄Fe₂, qui est cubique à face centrée. La phase βNb ne disparaît complètement que pour un rapport Fe/Nb de l'ordre de 0,6.

Il est apparu, comme on le verra plus loin, qu'une teneur élevée en niobium est très favorable à la résistance à la corrosion en eau lithiée.

Pour faire coexister les phases cubique et hexagonale, un rapport Fe/Nb plus élevé que 0,3 sera favorable en respectant la relation (Nb-0,5 %)/Fe+Cr+V > 2,5.

Une étude précise du diagramme ternaire pour les teneurs faibles en Fe et Nb montre que la teneur de Nb en solution solide évolue avec la teneur en Fe, à Nb constant.

Dès que la teneur en Fe dépasse 60 - 70 ppm pour l'alliage selon la présente invention, on voit apparaître la forme Zr(Nb,Fe)₂ hexagonale qui se substitue à la phase βNb pour un rapport en poids Nb/Fe sensiblement égal à 2,3.

Apparaît ensuite le composé (Zr,Nb)₄Fe₂ cubique à faces centrées, correspondant à Nb/Fe sensiblement égal à 0,6.

Cette phase cubique à faces centrées (Zr,Nb)₄Fe₂ commence à apparaître pour :

| | |
|---|---|
| 1 % Nb | entre 0,29 et 0,44 % Fe |
| 1,5 % Nb | entre 0,49 et 0,66 % Fe |
| 2 % Nb | au-delà de 0,78 % Fe |

Le diagramme montre qu'en augmentant simultanément la teneur en Nb et en Fe, on obtient une densité d'intermétalliques plus élevée, ce qui est favorable à la corrosion en milieu lithié.

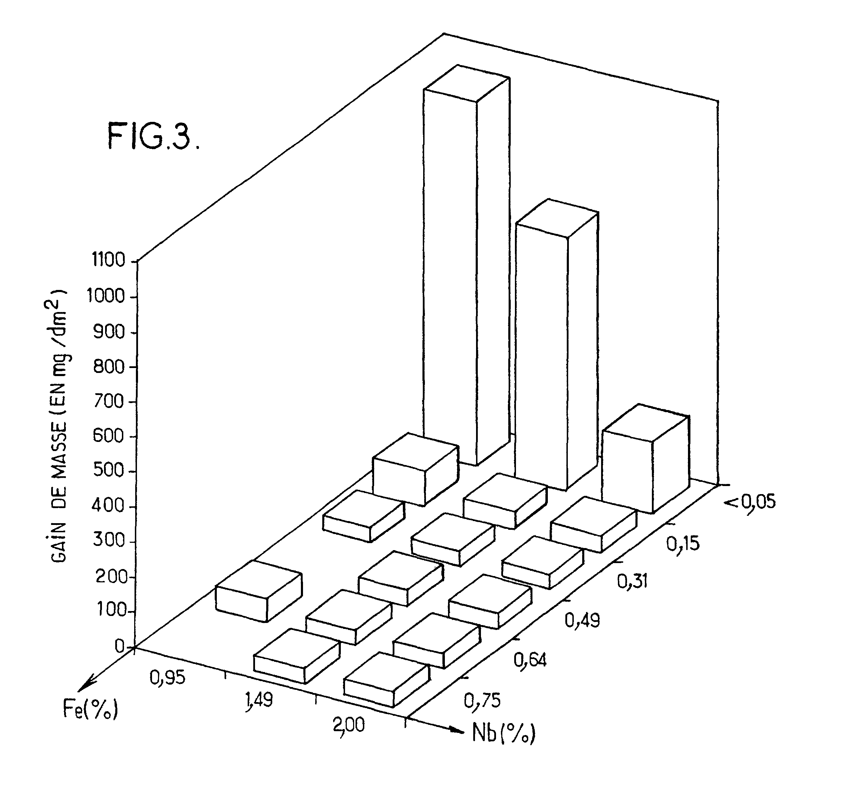

L'influence des teneurs en Fe et en Nb apparaît mieux sur la figure 3 qui donne la prise de poids d'échantillons d'alliage après maintien de 84 jours dans l'eau à une température de 360°C contenant 70 ppm de lithium ; la prise de poids d'un échantillon de Zircaloy 4 dans les mêmes conditions a été de 35,96 mg/dm₂.

On voit immédiatement l'intérêt de la présence simultanée d'une teneur élevée en niobium et en fer et du respect de la condition exposée plus haut.

## Revendications

1. Alliage à base de zirconium contenant également, en poids, en plus des impuretés inévitables, 0,02 à 1% de fer ,0,8% à 2,3% de niobium, moins de 2000 ppm d'étain, moins de 2000 ppm d'oxygène, moins de 100 ppm de carbone, de 5 à 35 ppm de soufre et moins de 0,25 % au total de chrome et/ou de vanadium, le rapport entre la teneur en niobium moins 0,5 % et la teneur en fer, complétée éventuellement par la teneur en chrome et/ou en vanadium, étant inférieur à 3.

2. Alliage suivant la revendication 1, contenant également 0,8 % à 1,1 % en poids de niobium, 0,3 % à 0,35 % en poids de fer, 0,15 % à 0,20 % en poids d'étain, 0,01 à 0,1 % en poids de chrome et/ou de vanadium, entre 1000 et 1600 ppm d'oxygène, entre 5 et 35 ppm de soufre et moins de 100 ppm de carbone.

3. Alliage suivant la revendication 1, à 1000-1600 ppm d'oxygène.

4. Tube de gainage en alliage suivant la revendication 1, 2 ou 3, à l'état recristallisé.

5. Produit plat en alliage suivant la revendication 1, 2 ou 3, à l'état recristallisé.

6. Application de l'alliage suivant l'une quelconque des revendications 1, 2 ou 3, à la constitution de composants de réacteur nucléaire à eau sous pression contenant initialement moins de 5 ppm de lithium.

7. Procédé de fabrication de tubes destinés à constituer la totalité ou la partie externe d'une gaine de crayon de combustible nucléaire ou un tube guide pour assemblage de combustible nucléaire, **caractérisé en ce que** :
on constitue une barre en un alliage à base de zirconium contenant également en poids, en dehors des impuretés inévitables, 0,02 à 1% de fer, 0,8% à 2,3 % de niobium, moins de 2000 ppm d'étain, moins de 2000 ppm d'oxygène, moins de 100 ppm de carbone, de 5 à 35 ppm de-soufre et moins de 0,25 % au total de chrome et/ou de vanadium, le rapport entre la teneur en niobium moins 0,5 % et la teneur en fer, complétée éventuellement par la teneur en chrome et/ou en vanadium, étant inférieur à 3 ;
on trempe à l'eau la barre après chauffage entre 1000°C et 1200°C ;
on file une ébauche après chauffage de 600°C à 800°C ;
on lamine à froid, en au moins deux passes, ladite ébauche pour obtenir un tube, avec des traitements thermiques intermédiaires entre 560°C et 620°C ; et
on effectue un traitement thermique final entre 560°C et 620°C, l'ensemble des traitements thermiques étant effectué en atmosphère inerte ou sous vide.

## Patentansprüche

1. Zirkoniumlegierung mit, in Gewichtsanteilen, zusätzlich zu den unvermeidbaren Verunreinigungen, 0,02 bis 1 % Eisen, 0,8 % bis 2,3 % Niobium, weniger als 2000 ppm Zinn, weniger als 2000 ppm Sauerstoff, weniger als 100 ppm Kohlenstoff, 5 bis 35 ppm Schwefel und weniger als total 0,25 % Chrom und/oder Vanadium, wobei das Verhältnis zwischen dem Niobiumgehalt minus 0,5 % und dem Eisengehalt, eventuell ergänzt durch den Chrom- und/oder Vanadiumgehalt, niedriger als 3 ist.

2. Legierung nach Anspruch 1, die auch 0,8 bis 1,1 Gew.% Niobium, 0,3 bis 0,35 Gew.% Eisen, 0,15 bis 0,20 Gew.% Zinn, 0,01 bis 0,1 Gew.% Chrom und/oder Vanadium, zwischen 1000 und 1600 ppm Sauerstoff, zwischen 5 und 35 ppm Schwefel und weniger als 100 ppm Kohlenstoff enthält.

3. Legierung nach Anspruch 1, mit 1000-1600 ppm Sauerstoff.

4. Hüllrohr aus einer Legierung nach Anspruch 1, 2 oder 3 im rekristallisierten bzw. umkristallisierten Zustand.

5. Flaches Produkt aus einer Legierung nach Anspruch 1, 2 oder 3 im rekristallisierten bzw. umkristallisierten Zustand.

6. Verwendung der Legierung nach einem der Ansprüche 1, 2 oder 3 zur Herstellung von Druckwasser-Kernreaktorbauteilen, die anfänglich weniger als 5 ppm Lithium enthalten.

7. Verfahren zur Herstellung von Rohren zur Bildung der Gesamtheit oder des äußeren Teils eines Kernreaktorbrennstabs oder eines Führungsrohrs für Kernreaktorbrennstabbündel,
**dadurch gekennzeichnet,**
**dass** man einen Stab aus einer Zirkoniumlegierung herstellt, die auch, in Gewichtsanteilen, außer den unvermeidbaren Verunreinigungen, 0,02 bis 1 % Eisen, 0,8 % bis 2,3 % Niobium, weniger als 2000 ppm Zinn, weniger als 2000 ppm Sauerstoff, weniger als 100 ppm Kohlenstoff, 5 bis 35 ppm Schwefel und weniger als total 0,25 % Chrom und/oder Vanadium enthält, wobei das Verhältnis zwischen dem Niobiumgehalt minus 0,5 % und dem Eisengehalt, eventuell ergänzt durch den Chrom- und/oder Vanadiumgehalt, niedriger als 3 ist;
**dass** man den Stab nach Erhitzung auf 1000°C bis 1200°C in Wasser taucht bzw. abschreckt;
**dass** man nach Erhitzung auf 600°C bis 800°C ein Vorprodukt extrudiert bzw. strangpresst;
**dass** man, um ein Rohr herzustellen, das genannte Vorprodukt wenigstens zwei Kaltwalzstichen unterzieht, mit thermischen Zwischenbehandlungen zwischen 560°C und 620°C;
und **dass** man eine thermische Endbehandlung zwischen 560°C und 620°C durchführt, wobei die Gesamtheit der thermischen Behandlungen in inerter Atmosphäre oder unter Vakuum durchgeführt wird.

## Claims

1. Zirconium-based alloy also containing by weight, in addition to the inevitable impurities, 0.02 to 1% of iron, 0.8 to 2.3% of niobium, less than 2000 ppm of tin, less than 2000 ppm of oxygen, less than 100 ppm of carbon, from 5 to 35 ppm of sulphur and less than 25% in total of chromium and/or vanadium, the ratio between the niobium content less 0.5% and the iron content, possibly completed by the chromium and/or vanadium content, being less than 3.

2. Alloy as claimed in Claim 1, also containing 0.8 to 1.1% by weight of niobium, 0.3 to 0.35% by weight of iron, 0.15 to 0.20% by weight of tin, 0.01 to 0.1% by weight of chromium and/or vanadium, between 1000 and 1600 ppm of oxygen, between 5 and 35 ppm of sulphur and less than 100 ppm of carbon.

3. Alloy as claimed in Claim 1, with 1000 - 1600 ppm of oxygen.

4. Cladding tube made from alloy as claimed in Claim 1, 2 or 3, in the recrystallised state.

5. Flat product made from alloy as claimed in Claim 1, 2 or 3, in the recrystallised state.

6. Application of the alloy as claimed in any one of Claims 1, 2 or 3 to the constitution of components for a pressurised-water nuclear reactor initially containing less than 5 ppm of lithium.

7. Method of manufacture of tubes intended to constitute the entirety of or the external part of a cladding for a nuclear fuel rod or a guide tube for a nuclear fuel assembly, **characterised in that**:
a bar is formed from a zirconium-based alloy also containing by weight, in addition to the inevitable impurities, 0.02 to 1% of iron, 0.8 to 2.3% of niobium, less than 2000 ppm of tin, less than 2000 ppm of oxygen, less than 100 ppm of carbon, from 5 to 35 ppm of sulphur and less than 25% in total of chromium and/or vanadium, the ratio between the niobium content less 0.5% and the iron content, possibly completed by the chromium and/or vanadium content, being less than 3;
the bar is quenched with water after heating between 1000°C and 1200°C;
a blank is drawn after heating from 600°C to 800°C;
the said blank is cold-rolled in at least two operations in order to obtain a tube with intermediate heat treatments between 560°C and 620°C; and a final heat treatment is carried out between 560°C and 620°C, all of the heat treatments being carried out in an inert atmosphere or in a vacuum.
